(19) Europäisches Patentamt / European Patent Office / Office européen des brevets

(11) **EP 2 302 781 B1**

(12) **EUROPÄISCHE PATENTSCHRIFT**

(45) Veröffentlichungstag und Bekanntmachung des Hinweises auf die Patenterteilung:
**18.07.2018  Patentblatt 2018/29**

(21) Anmeldenummer: **10180515.8**

(22) Anmeldetag: **28.09.2010**

(51) Int Cl.:
*H02M 5/451* (2006.01)     *H02M 5/458* (2006.01)
*H02M 7/527* (2006.01)     *H02M 7/529* (2006.01)
*H02M 7/5395* (2006.01)     *H02M 7/48* (2007.01)

(54) **Verfahren zum Erzeugen einer Ausgangsspannung mit einstellbarem Effektivwert aus einer veränderlichen Zwischenkreisspannung**

Method for generating an output voltage with an adjustable rms value from a variable DC link voltage

Procédé de génération d'une tension de sortie avec une valeur efficace d'une liaison intermédiaire en continu

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.09.2009   DE 102009048550**

(43) Veröffentlichungstag der Anmeldung:
**30.03.2011   Patentblatt 2011/13**

(73) Patentinhaber: **Lenze Automation GmbH
31855 Aerzen (DE)**

(72) Erfinder:
• **Düsterberg, Dirk
31860 Emmerthal (DE)**
• **Hohnsbein, Thorsten
31855 Aerzen (DE)**

(74) Vertreter: **Patentanwälte
Ruff, Wilhelm, Beier, Dauster & Partner mbB
Kronenstraße 30
70174 Stuttgart (DE)**

(56) Entgegenhaltungen:
EP-A2- 0 387 686       WO-A2-2009/033924
DE-T2- 69 533 001

**Beschreibung**

Die Erfindung betrifft ein Verfahren zum Erzeugen einer Ausgangsspannung mit einem einstellbaren Effektivwert aus einer veränderlichen Zwischenkreisspannung gemäß Anspruch 1. Vorteilhafte Ausführungsformen sind in den abhängigen Ansprüchen definiert. Bei elektrischen Antriebssystemen mit Elektromotoren werden üblicherweise sogenannte (Frequenz)-Umrichter verwendet, die aus einer Netzwechselspannung eine Ausgangsspannung mit einstellbarer Frequenz und Amplitude erzeugen, die zur Ansteuerung der Elektromotoren dient. In einem Umrichter wird hierzu zunächst die Netzwechselspannung in eine sogenannte Zwischenkreisspannung gleichgerichtet, die üblicherweise mittels sogenannter Schaltbrücken in die Ausgangsspannung mit einstellbarer Frequenz transformiert wird. Um einen Effektivwert der vom Umrichter erzeugten Ausgangsspannung einzustellen, wird üblicherweise die Zwischenkreisspannung einer Pulsweitenmodulation unterzogen, wobei der Effektivwert vom gewählten Tastgrad der Pulsweitenmodulation abhängt. Der sich einstellende Effektivwert der Ausgangsspannung hängt jedoch neben dem eingestellten Tastgrad auch von einem momentanen Wert der Zwischenkreisspannung ab. Die Zwischenkreisspannung ist wiederum von vielen Faktoren abhängig, beispielsweise von der momentanen Netzspannung, einer momentanen Last des Umrichters und/oder von anderen Umrichtern, die in einem sogenannten Umrichter-Verbund arbeiten.

Um den Effektivwert der Ausgangsspannung zuverlässig einstellen zu können, ist es daher notwendig, die momentane Zwischenkreisspannung zu messen und bei der Einstellung des Tastgrads zu berücksichtigen.

Zur Erzeugung der pulsweitenmodulierten Ausgangsspannung aus der Zwischenkreisspannung wird üblicherweise ein Zähler in Verbindung mit einem Vergleicher bzw. Komparator eingesetzt, wobei der Zähler mit einem Zählertaktsignal mit konstanter Zählertaktfrequenz betrieben bzw. inkrementiert wird.

Der gewünschte Tastgrad wird durch Berechnen von geeigneten Zählersollwerten eingestellt. Die Zählersollwerte werden hierbei mit dem momentanen Zählerwert verglichen, wobei ein Pegel der Ausgangsspannung in Abhängigkeit von einem Ergebnis des Vergleichens eingestellt wird.

Um die momentane Zwischenkreisspannung zu berücksichtigen, werden die Zählersollwerte in Abhängigkeit von der momentanen Zwischenkreisspannung berechnet, wozu eine Division notwendig ist. Divisionen erfordern jedoch in kleineren Mikroprozessoren, die üblicherweise in Umrichtern verwendet werden, eine erhebliche Rechenzeit, wodurch nicht gewünschte Totzeiten bei einer Regelung der Ausgangsspannung verursacht werden. Derartige Totzeiten erfordern beispielsweise höhere Kapazitätswerte bei den verwendeten Zwischenkreiskondensatoren und verschlechtern allgemein die Regelungsgüte.

Die DE 695 33 001 T2 zeigt einen Motorregler mit einer Zerhackerschaltung.

Die WO 2009/033924 A2 zeigt ein Verfahren zur Regelung eines Schaltwandlers mit Ausgangsspannungsrückkopplung.

Die EP 0 387 686 A2 zeigt ein Verfahren zur Spannungs-Frequenz-Wandlung.

Der Erfindung liegt die Aufgabe zugrunde, ein Verfahren zum Erzeugen einer Ausgangsspannung mit einem einstellbaren Effektivwert aus einer veränderlichen Zwischenkreisspannung zur Verfügung zu stellen, welches eine Berücksichtigung eines momentanen Werts der Zwischenkreisspannung bei der Erzeugung der Ausgangsspannung mit möglichst geringer Rechenlast ermöglicht.

Die Erfindung löst diese Aufgabe durch ein Verfahren mit den Merkmalen des Anspruchs 1.

Bevorzugte Ausführungsformen sind Gegenstand der Unteransprüche, deren Wortlaut hiermit durch Bezugnahme zum Gegenstand der Beschreibung gemacht wird, um unnötige Wiederholungen zu vermeiden.

Bei dem erfindungsgemäßen Verfahren zum Erzeugen einer Ausgangsspannung mit einem einstellbaren Effektivwert aus einer veränderlichen Zwischenkreisspannung wird der Effektivwert der Ausgangsspannung mittels einer Pulsweitenmodulation der Zwischenkreisspannung eingestellt. Hierzu wird die momentane Zwischenkreisspannung gemessen. Auf Basis der gemessenen Zwischenkreisspannung wird dann ein Zählertaktsignal mit einer Zählertaktfrequenz erzeugt, die proportional zu der gemessenen Zwischenkreisspannung ist. Es wird mindestens ein Zählersollwert erzeugt, der von einem eingestellten Effektivwert der Ausgangsspannung abhängig ist. Es werden Zählerwerte im Takt des Zählertaktsignals erzeugt, beispielsweise wird ein Zähler im Takt des Zählertaktsignals inkrementiert, wobei die Ausgangsspannung als pulsweitenmoduliertes Signal erzeugt wird, indem der momentane Zählerwert mit dem mindestens einen Zählersollwert verglichen wird, wobei ein Pegel der Ausgangsspannung in Abhängigkeit vom Ergebnis des Vergleichens eingestellt wird. Im Gegensatz zu den herkömmlichen Verfahren, bei denen Zählerwerte auf Basis eines Zählertaktsignals erzeugt werden, welches eine konstante Frequenz aufweist, werden bei dem erfindungsgemäßen Verfahren Zählerwerte auf Basis eines Zählertaktsignals mit variabler Zählertaktfrequenz erzeugt, wobei die Zählertaktfrequenz proportional zur momentanen Zwischenkreisspannung ist, wodurch auf eine Division verzichtet werden kann. Die Zählertaktfrequenz nimmt erfindungsgemäß proportional zu der gemessenen Zwischenkreisspannung zu. Dies bewirkt, dass die Zählerwerte mit einer höheren Frequenz erzeugt bzw. inkrementiert oder dekrementiert werden, wodurch vorgegebene Zählersollwerte ausgehend von einem Anfangswert schneller erreicht werden. Bei einer vorgegebenen, konstanten Periodendauer der pulsweitenmodulierten Ausgangsspannung stellt sich dadurch ein umgekehrt proportionaler Zusammenhang zwischen dem Tastgrad und der Zwischenkreisspannung ein, was im Ergebnis einer Division bei der Berechnung der Zählersollwerte entspricht.

In einer Weiterbildung werden ein erster Zählersollwert und ein zweiter Zählersollwert erzeugt, wobei eine Differenz zwischen dem ersten Zählersollwert und dem zweiten Zählersollwert ausschließlich von dem eingestellten Effektivwert der Ausgangsspannung abhängig ist. Die Differenz zwischen dem ersten Zählersollwert und dem zweiten Zählersollwert ist insbesondere nicht von der Zwischenkreisspannung abhängig. Ein Pegel der Ausgangsspannung wird auf einen ersten Wert, beispielsweise die Zwischenkreisspannung, eingestellt, wenn der Zählerwert größer oder gleich wie der erste Zählersollwert ist und kleiner oder gleich wie der zweite Zählersollwert ist, und andernfalls wird der Pegel der Ausgangsspannung auf einen zweiten Wert, beispielsweise 0V, eingestellt.

In einer Weiterbildung wird der Zählerwert auf einen Anfangswert, beispielsweise Null, zurückgesetzt, wenn eine vorgegebene, insbesondere konstante, Periodendauer des pulsweitenmodulierten Signals bzw. der Ausgangsspannung abgelaufen ist. Die vorgegebene Periodendauer kann beispielsweise in einem Bereich von 0,01 ms bis 100ms liegen. Bevorzugt beträgt sie 1 ms.

Die Erfindung wird nachfolgend unter Bezugnahme auf die beigefügten Zeichnungen beschrieben, die bevorzugte Ausführungsformen der Erfindung zeigen. Hierbei zeigen schematisch.

Fig. 1 ein Blockschaltbild einer Vorrichtung zum Erzeugen einer Ausgangsspannung mit einem einstellbaren Effektivwert aus einer veränderlichen Zwischenkreisspannung und

Fig. 2 Signalverläufe bei der in Fig. 1 gezeigten Vorrichtung.

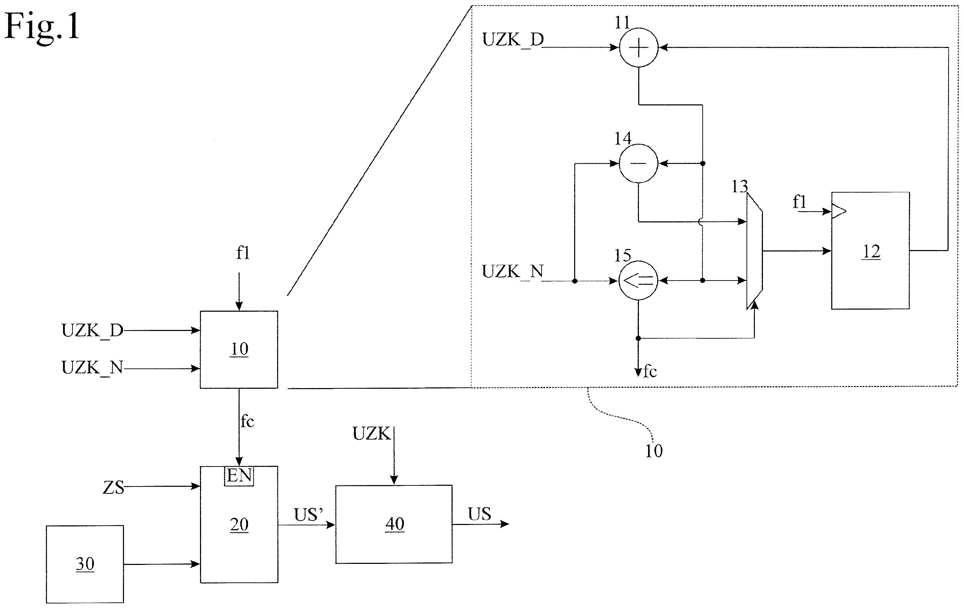

Fig. 1 zeigt ein Blockschaltbild einer Vorrichtung zum Erzeugen einer Ausgangsspannung US mit einem einstellbaren Effektivwert aus einer veränderlichen Zwischenkreisspannung UZK. Die gezeigte Vorrichtung ist Bestandteil eines nicht näher dargestellten, herkömmlichen (Frequenz-)Umrichters, der zur Ansteuerung von nicht näher dargestellten Elektromotoren eines elektrischen Antriebssystems dient.

Die Vorrichtung umfasst eine Frequenzteilereinheit 10, die mit einem Systemtaktsignal mit einer Frequenz f1, einem digitalen Wert UZK_D, welcher der momentanen bzw. aktuellen Zwischenkreisspannung UZK entspricht, und einem digitalen Normierungswert UZK_N beaufschlagt ist. Die Frequenzteilereinheit 10 erzeugt an ihrem Ausgang ein Zählertaktsignal mit einer Zählertaktfrequenz fc, die sich wie folgt ergibt:

$$fc = f1 * UZK\_D/UZK\_N$$

Die Zählertaktfrequenz fc ist folglich proportional zu der gemessenen Zwischenkreisspannung UZK bzw. deren digitaler Entsprechung UZK_D.

Die Frequenzteilereinheit 10 umfasst einen Summierer 11, ein mit dem Systemtaktsignal getaktetes Register bzw. Flip-Flop 12, einen Multiplexer 13, einen Subtrahierer 14 und einen Vergleicher 15, die in der dargestellten Weise miteinander verschaltet sind. Eine derartige Frequenzteilereinheit ist beispielsweise in der US 4,816,774 beschrieben, auf die insoweit Bezug genommen wird, um eine redundante Funktionsbeschreibung zu vermeiden.

Das Zählertaktsignal mit der Frequenz fc dient zur Versorgung eines Zähler/Vergleichers 20 mit einem Taktsignal. Der Zähler/Vergleicher 20 wird weiter mit einem Zählersollwert ZS beaufschlagt und inkrementiert Zählerwerte im Takt fc des Zählertaktsignals. Der Zähler/Vergleicher 20 erzeugt eine Zwischen-Ausgangsspannung US' als pulsweitenmoduliertes Signal, indem er den momentanen Zählerwert mit dem Zählersollwert ZS vergleicht, wobei ein Pegel bzw. logischer Zustand der Zwischen-Ausgangsspannung US' in Abhängigkeit vom Ergebnis des Vergleichens eingestellt wird.

Vorliegend erzeugt der Zähler/Vergleicher 20 die Zwischen-Ausgangsspannung US' mit einem logischen Pegel von 1, wenn der Zählerwert kleiner als der Zählersollwert ZS ist, andernfalls wird die Zwischen-Ausgangsspannung US' mit einem logischen Pegel von 0 erzeugt. Die Zwischen-Ausgangsspannung US' wird mittels einer Treibereinheit 40 hinsichtlich ihres Pegels auf die Zwischenkreisspannung UZK umgesetzt. Bei einem logischen Pegel 1 der Zwischen-Ausgangsspannung US' wird am Ausgang der Treibereinheit 40 die Zwischenkreisspannung UZK ausgegeben und bei einem logischen Pegel 0 der Zwischen-Ausgangsspannung US' wird am Ausgang der Treibereinheit 40 Massespannung ausgegeben.

Eine Timereinheit 30 setzt den Zählerwert des Zähler/Vergleichers 20 auf einen Anfangswert Null zurück, wenn eine vorgegebene Zeitdauer, beispielsweise 1 ms, abgelaufen ist. Die Timereinheit 30 bestimmt folglich die Periodendauer des pulsweitenmodulierten Ausgangssignals US' bzw. US.

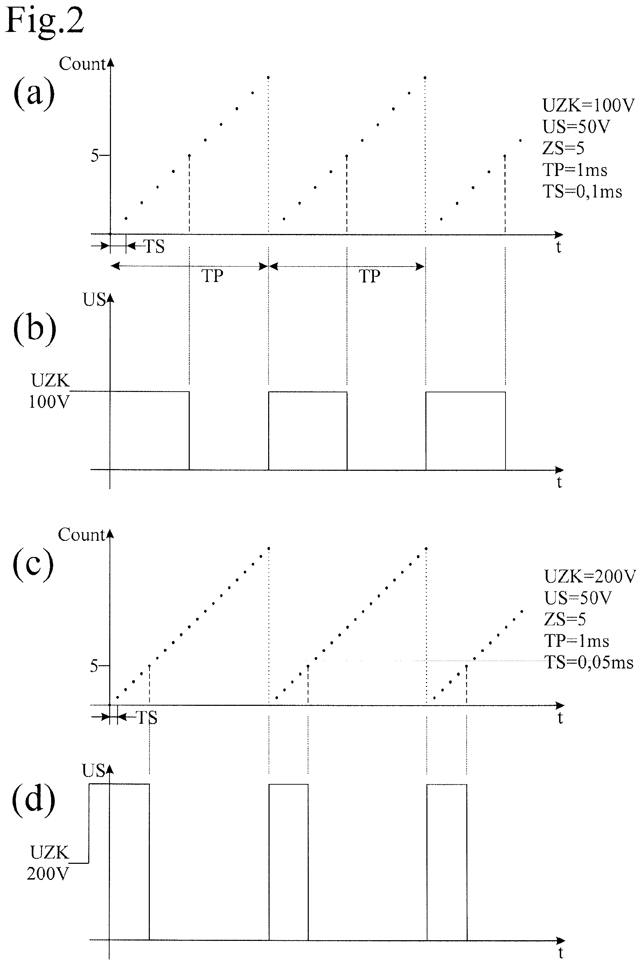

Ein Betrieb der in Fig. 1 gezeigten Vorrichtung wird nachfolgend unter Bezugnahme auf Fig. 2, Teildiagramme (a) bis (d) beschrieben.

Um die Beschreibung zu vereinfachen, sei angenommen, dass für einen Norm-Betriebsfall der digitale Normierungswert UZK_N 1000 beträgt, die momentane Zwischenkreisspannung in digitaler Darstellung UZK_D 100 beträgt, ein eingestellter Effektivwert der Ausgangsspannung US 50V beträgt, die Frequenz f1 des Systemtaktsignals konstant 100kHz beträgt und eine Periodendauer TP der pulsweitenmodulierten Ausgangsspannung US konstant 1 ms beträgt.

Die Zählertaktfrequenz fc ergibt sich dann zu:

$$fc = 100KHz * 100/1000 = 10kHz$$

Aufgrund der Zählertaktfrequenz fc von 10kHz werden Zählerwerte jeweils in einer Zählerzykluszeit TS von 0,1 ms erzeugt.

Um einen Effektivwert der pulsweitenmodulierten Ausgangsspannung US von 50V zu bewirken, muss der Tastgrad, d.h. das Verhältnis der Länge des eingeschalteten Zustands (Impulsdauer) zur Periodendauer TP, 0,5 bzw. 50% betragen. Dies entspricht einem Zählersollwert ZS von 5.

Beginnend bei einem Zählerwert von Null am Anfang eines jeweiligen Zyklus der pulsweitenmodulierten Ausgangsspannung US werden die Zählerwerte alle 0,1 ms inkrementiert, siehe Fig. 2, Teildiagramm (a). Solange die Zählerwerte kleiner als der Zählersollwert ZS mit einem Wert von 5 sind, erzeugt der Zähler/Vergleicher 20 die Zwischen-Ausgangsspannung US' mit einem logischen Pegel von 1, d.h. die Ausgangsspannung US ist gleich der Zwischenkreisspannung UZK, siehe Fig. 2, Teildiagramm (b). Nach 0,5ms beträgt der Zählerwert 5, d.h. der Zählerwert ist nicht mehr kleiner als der Zählersollwert ZS, worauf der Zähler/Vergleicher 20 die Zwischen-Ausgangsspannung US' mit einem logischen Pegel von Null erzeugt. Die Ausgangsspannung US wird dann mit einem Massespannungspegel ausgegeben. Auf diese Weise wird eine Ausgangsspannung mit einem Tastgrad von 50% erzeugt, was bei der aktuellen Zwischenkreisspannung von 100V einem Effektivwert von 50V entspricht.

Nimmt nun, wie in den Teildiagrammen (c) und (d) gezeigt, die Zwischenkreisspannung UZK auf einen Wert von 200V bzw. die digitale Darstellung UZK_D auf 200 zu, ergibt sich die Zählertaktfrequenz fc zu:

$$fc = 100KHz * 200/1000 = 20kHz$$

Aufgrund der Zählertaktfrequenz fc von 20kHz werden nun Zählerwerte jeweils in einer Zählerzykluszeit TS von 0,05ms erzeugt.

Da der Zählersollwert konstant bleibt, d.h. unabhängig von der aktuellen Zwischenkreisspannung UZK ist, wird der Zählerwert 5 bereits nach der Hälfte der Zeit, d.h. 0,25ms, erreicht. Da die Periodendauer TP konstant 1 ms beträgt, wird auf diese Weise eine Ausgangsspannung mit einem Tastgrad von 25% erzeugt, was bei der aktuellen Zwischenkreisspannung von 200V einem Effektivwert von 50V entspricht.

Da die Zählertaktfrequenz fc proportional zur aktuellen Zwischenkreisspannung UZK ist, ist der Tastgrad bei konstanter Periodendauer TP umgekehrt proportional zur aktuellen Zwischenkreisspannung UZK, wodurch eine Berücksichtigung, d.h. Kompensation, der aktuellen Zwischenkreisspannung UZK bei der Erzeugung des Effektivwerts der Ausgangsspannung US möglich ist, ohne dass hierzu der Zählersollwert ZS unter Verwendung einer Division neu zu berechnen ist. Dies verringert die notwendige Rechenleistung erheblich, wodurch rechenzeitbedingte Totzeiten vermieden werden können und die Regelungsgüte zunimmt.

Bei der gezeigten Ausführungsform sind die Pulse der pulsweitenmodulierten Ausgangsspannung US linksbündig im Zyklus angeordnet, d.h. ein Puls beginnt am Anfang eines jeweiligen Zyklus. In Abhängigkeit vom Anwendungsfall kann es jedoch günstiger sein, die Pulse innerhalb eines Zyklus zu zentrieren. Um dies zu erzielen, sind zwei Zählersollwerte ZS1 und ZS2 zu berechnen, wobei beispielsweise der erste Zählersollwert ZS1 einen Einschaltzeitpunkt und der zweite Zählersollwert ZS2 einen Ausschaltzeitpunkt eines Pulses der pulsweitenmodulierten Ausgangsspannung US definiert.

Die Zählersollwerte ZS1 und ZS2 können beispielsweise nach folgender Formel berechnet werden:

$$ZS1 = (TP\_D - US\_D)/2$$

$$ZS2 = (TP\_D + US\_D)/2$$

Hierbei bezeichnet der Wert TP_D die Periodendauer TP in Zählerinkrementen und US_D den Effektivwert der Ausgangsspannung in digitaler Darstellung. Eine Differenz zwischen dem ersten Zählersollwert ZS1 und dem zweiten Zählersollwert ZS2 ist ausschließlich von dem eingestellten Effektivwert der Ausgangsspannung US_D abhängig. Auch bei dieser Berechnung der Zählersollwerte ZS1 und ZS2 kann auf eine Fließkommadivision verzichtet werden, da die Division durch Zwei mittels einer Shift-Operation realisierbar ist.

Bei einer mittensymmetrischen Pulsweitenmodulation bei Verwendung einer vorzeichenbehafteten Sollspannung in Dreiphasensystemen können die Zählersollwerte ZS1 und ZS2 beispielsweise nach folgender Berechnungsmethode berechnet werden:

$$ZS1 = (TP\_D - 2*US\_D)/4$$

$$ZS2 = (3*TP\_D + 2*US\_D)/4$$

Allen Ausführungsformen ist gemeinsam, dass im Gegensatz zu herkömmlichen Verfahren, bei denen ein Zähler mit konstantem Takt betrieben wird und Zählersollwerte unter Berücksichtigung der aktuellen Zwischenkreisspannung unter Verwendung einer Division berechnet werden, erfindungsgemäß der Zähler/Vergleicher 20 mit einem variablen Takt betrieben wird, der proportional zur Zwischenkreisspannung UZK ist, was im Ergebnis der herkömmlichen Division bei der Berechnung der Zählersollwerte entspricht. Die Takteinstellung erfolgt hierbei mittels der Frequenzteilereinheit 10, d.h. eine rechenintensive Divisionsoperation bei der Berechnung des oder der Zählersollwerte kann entfallen.

Es versteht sich, dass die in den Ausführungsbeispielen genannten, konkreten Zahlenwerte von Frequenzen, Zählersollwerten, Periodendauern etc. aus Gründen der besseren Beschreibbarkeit, d.h. als Beispielwerte, gewählt sind und von Zahlenwerten abweichen können, die bei einer realen Anwendung zu wählen sind.

**Patentansprüche**

1. Verfahren zum Erzeugen einer Ausgangsspannung (US) mit einem einstellbaren Effektivwert aus einer veränderlichen Zwischenkreisspannung (UZK), wobei

    - der Effektivwert der Ausgangsspannung mittels einer Pulsweitenmodulation der Zwischenkreisspannung eingestellt wird, mit dem Schritt:
    - Messen der Zwischenkreisspannung,

    **gekennzeichnet durch** folgende weitere Schritte:

    - Erzeugen eines Zählertaktsignals mit einer Zählertaktfrequenz (fc), die proportional zu der gemessenen Zwischenkreisspannung ist,
    - Erzeugen von mindestens einem Zählersollwert (ZS), der von einem eingestellten Effektivwert der Ausgangsspannung abhängig ist,
    - Erzeugen von Zählerwerten im Takt des Zählertaktsignals und
    - Erzeugen der Ausgangsspannung als pulsweitenmoduliertes Signal, indem der Zählerwert mit dem mindestens einen Zählersollwert verglichen wird und ein Pegel der Ausgangsspannung in Abhängigkeit vom Ergebnis des Vergleichens eingestellt wird.

2. Verfahren nach Anspruch 1, **dadurch gekennzeichnet, dass** ein erster Zählersollwert (ZS1) und ein zweiter Zählersollwert (ZS2) erzeugt werden, wobei eine Differenz zwischen dem ersten Zählersollwert und dem zweiten Zählersollwert von dem eingestellten Effektivwert der Ausgangsspannung abhängig ist und nicht von der Zwischenkreisspannung abhängig ist und der Pegel der Ausgangsspannung auf einen ersten Wert (UZK) eingestellt wird, wenn der Zählerwert größer oder gleich wie der erste Zählersollwert ist und kleiner oder gleich wie der zweiter Zählersollwert ist, und andernfalls der Pegel der Ausgangsspannung auf einen zweiten Wert eingestellt wird.

3. Verfahren nach Anspruch 1 oder 2, **dadurch gekennzeichnet, dass** der Zählerwert auf einen Anfangswert zurückgesetzt wird, wenn eine vorgegebene Periodendauer (TP) des pulsweitenmodulierten Signals abgelaufen ist.

**Claims**

1. Method for generating an output voltage (US) with an adjustable root mean square (rms) value from a variable direct current (DC) link voltage (UZK), wherein

    - the rms value of the output voltage is adjusted using pulse width modulation of the DC link voltage, including the step of:
    - measuring the DC link voltage,

    **characterized by** subsequent further steps of:

    - generating a counter clock signal with a counter clock frequency (fc) which is proportional to the measured DC link voltage,
    - generating at least one counter target value (ZS) which is a function of an adjusted rms value of the output voltage,
    - generating counter values in time with the counter clock signal, and
    - generating the output voltage as a pulse width modulated signal, in that the counter value is compared to the at least one counter target value and a level of the output voltage is adjusted in response to the result of the comparison.

2. Method according to claim 1, **characterized in that** a first counter target value (ZS1) and a second counter target value (ZS2) are generated, wherein a difference between the first counter target value and the second counter target value is a function of the adjusted rms value of the output voltage and not a function of the DC link voltage, and the level of the output voltage is adjusted to a first value (UZK) if the counter value is greater or equal to the first counter target value and smaller or equal to the second counter target value, and failing this, the level of the output voltage is adjusted to a second value.

3. Method according to claim 1 or 2, **characterized in that** the counter value is reset to an initial value if a predetermined time period (TP) of the pulse width modulated signal has expired.

**Revendications**

1. Procédé de génération d'une tension de sortie (US) ayant une valeur efficace réglable à partir d'une tension de circuit intermédiaire modifiable (UZK), dans lequel

   - la valeur efficace de la tension de sortie est réglée au moyen d'une modulation d'impulsion en largeur de la tension de circuit intermédiaire par l'étape consistant à :
   - mesurer la tension de circuit intermédiaire, **caractérisé par** les étapes supplémentaires consistant à :

   - générer un signal d'horloge de compteur ayant une fréquence d'horloge de compteur (fc) qui est proportionnelle à la tension de circuit intermédiaire mesurée,
   - générer au moins une valeur nominale de compteur (ZS) qui dépend d'une valeur efficace réglée de la tension de sortie,
   - générer des valeurs de compteur dans l'horloge du signal d'horloge de compteur et
   - générer la tension de sortie sous la forme d'un signal modulé en largeur d'impulsion en comparant la valeur de compteur à ladite au moins une valeur nominale de compteur et en réglant un niveau de la tension de sortie en fonction du résultat de la comparaison.

2. Procédé selon la revendication 1, **caractérisé en ce qu'**une première valeur nominale de compteur (ZS1) et une deuxième valeur nominale de compteur (ZS2) sont générées, dans lequel une différence entre la première valeur nominale de compteur et la deuxième valeur nominale de compteur dépend de la valeur efficace réglée de la tension de sortie et ne dépend pas de la tension de circuit intermédiaire et dans lequel le niveau de la tension de sortie est réglé à une première valeur (UZK) lorsque la valeur de compteur est supérieure ou égale à la première valeur nominale de compteur et est inférieure ou égale à la deuxième valeur nominale de compteur et dans le cas contraire, le niveau de la tension de sortie est réglé à une deuxième valeur.

3. Procédé selon la revendication 1 ou 2, **caractérisé en ce que** la valeur de compteur est réinitialisée à une valeur de départ lorsqu'une période de temps prédéterminée (TP) du signal modulé en largeur d'impulsion s'est écoulée.

Fig.1

EP 2 302 781 B1

# Fig.2

(a)

UZK=100V
US=50V
ZS=5
TP=1ms
TS=0,1ms

(b)

(c)

UZK=200V
US=50V
ZS=5
TP=1ms
TS=0,05ms

(d)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69533001 T2
- WO 2009033924 A2
- EP 0387686 A2
- US 4816774 A